# EUROPEAN PATENT SPECIFICATION

(11) **EP 1 106 499 B1**
(45) Date of publication and mention of the grant of the patent: **12.11.2008**
(21) Application number: 00650203.3
(22) Date of filing: 30.11.2000
(51) Int. Cl.: B63B 22/22, A01K 75/04, B63B 5/24, B29C 39/10, B29C 65/66

(54) **A buoyancy float**
Auftriebskörper
Flotteur

(30) Priority: 08.12.1999 IE 991029; 28.09.2000 IE 20000780
(43) Date of publication of application: 13.06.2001
(73) Proprietor: Preton Limited, Cavan (IE)
(72) Inventor: Milligan, Alec, Cavan (IE); Healy, Robert Pierce, Killeshandra, County Cavan (IE)
(74) Representative: O'Connor, Donal Henry

(56) References cited:
- BE-A- 524 642
- FR-A- 619 713
- FR-A- 1 266 606
- GB-A- 289 641
- GB-A- 602 405
- GB-A- 847 342
- US-A- 5 921 418
- PATENT ABSTRACTS OF JAPAN vol. 1997, no. 09, 30 September 1997 (1997-09-30) & JP 09 117237 A (ZEN SUISAN KK), 6 May 1997 (1997-05-06)

## Description

### Introduction

The present invention relates to a method of manufacturing a buoyancy float of the type comprising an inflatable, elongate, hollow body of a thermoplastics material, the float body terminating adjacent each end in at least a pair of spaced-apart anchorages, wherein the method comprises the initial steps of moulding the hollow body from the hot plastics material and forming a throughbore in one end of the float body.

In fishing, nets are often suspended across wide expanses of water out of buoyancy floats until such time as it is desired to gather in the catch. These buoyancy floats are also used extensively in other marine operations, such as, for example, fish farming, particularly in the farming of bivalves, where the bivalves are suspended from the ropes which in turn are supported by buoyancy floats in the water.

Very often a number of buoyancy floats carry between them a rope which in turn has suspended therefrom further ropes, or netting. Ideally such floats should support one or more spaced rows of ropes or netting so that for example additional mussels could be reared, or additional nets could be hung one inside the other. This could be particularly important in fish farming where there is a considerable need to ensure that the fish being reared in the waters are not allowed to escape to the open sea or other area from which they are being reared.

GB-A-847 342 discloses a process for making inflatable buoyancy floats utilizing centrifugal casting.

One of the problems with such constructions of buoyancy floats is firstly the difficulty in fitting a valve to the buoyancy float during manufacture and then secondly, during use, replacing defective valves. The latter is a particular problem in that the conditions under which the valves operate are often quite severe and the valves are subject to relatively frequent malfunction. Very often, when it is required to re-flate the buoyancy float after a period of time, the valves are often inoperative. A further problem with such valves is that there can be considerable difficulty in fitting them even where adhesives and the like are used. By its very nature, the moulding of a plastics article and in particular the moulding of a valve receiving hole within such a buoyancy float is one that does not produce a hole to relatively tight tolerances. Thus, considerable difficulties are often experienced in mounting such a valve within a buoyancy float and very often, rather than attempt to mould the valve receiving hole during manufacture or at least to fully mould it, a certain amount of reworking, for example, reaming or drilling of the hole is required prior to insertion of the valve. These are time-consuming operations which mean that after the inflatable buoyancy float has been manufactured, subsequent working operations have to take place on the float to fit the valve. Often, no matter how carefully such valves are fitted, they detach from the body of the float during use, rendering the float inoperative. Essentially, the problem with a hot plastics melt material is that there is a substantial amount of shrinkage, somewhat of the order of 2% at 100°C.

The present inventions is directed towards providing an improved construction of buoyancy float which will allow a wider range of uses of such floats in marine fishing and other marine cultural operations.

The present invention is further directed towards overcoming these problems and in particular to providing a method of manufacturing such an inflatable buoyancy float which will allow the fitting of the valve in an efficient and timely manner. Additionally, it is directed towards providing a buoyancy float in which the valve will not be prone to detachment from the buoyancy float body while in use. Still further, the invention is directed towards providing an improved construction of valve for such a buoyancy float and in particular one which will allow easy inflation as well as easy and safe deflation.

### Statements of Invention

According to the invention there is provided a method of manufacturing a buoyancy float of the type comprising an inflatable, elongate, hollow body of a thermoplastics material, the float body terminating adjacent each end in at least a pair of spaced-apart anchorages, wherein the method comprises the steps of
moulding the hollow body from the hot plastics material,
forming a throughbore in one end of the float body,
forming a screw thread in the throughbore by inserting a closure having a closure body into the throughbore while the thermoplastics material is warm and malleable, the closure body having a screw thread formed thereon.

In another embodiment of the invention the method comprises the intermediate step of forming a closure-receiving spigot in one end of the float body, the a closure-receiving spigot being proud of the float body, and thereafter forming the throughbore in the closure-receiving spigot (9).

In one embodiment of the invention there is provided a method in which the step of forming the throughbore in one end of the float body further comprises forming a throughbore having a diameter substantially smaller than the exterior dimensions of the screw-thread formed on the closure body.

In a further embodiment of the invention there is provided a method comprising the additional step of rotating the closure as it is inserted into the throughbore.

In another embodiment of the invention there is provided a method comprising the additional step of allowing the plastics material to set around the screw-thread formed on the closure body.

In one embodiment of the invention there is provided a method comprising the intermediate steps of forming a substantially cylindrical body having a pair of end plates and forming an upstanding support on each end plate, each support having through-holes forming the anchorages.

In a further embodiment of the invention there is provided a method comprising the intermediate steps of forming one support comprising four upstanding in-line pillars bridged by connector plates having three through holes, the outer holes forming the anchorages and the inner hole, a carrying handle, and forming the other support comprising four upstanding in-line pillars, each of the outer pillars bridged by a connector plate within the adjacent pillar, the connector plates having holes forming the anchorages and a closure-receiving spigot formed between the inner pillars.

In another embodiment of the invention there is provided a method in which the step of forming a screw thread in the throughbore by inserting the closure further comprises inserting a closure having a closure body with a screw thread formed thereon that tapers towards the distal free end of the closure body over portion of its length.

In one embodiment of the invention there is provided a method in which the step of forming a screw thread in the throughbore by inserting a closure further comprises inserting a one-way valve for inflation of the float, the valve comprising a valve body having a gas inlet and a gas outlet and a non-return valve mechanism in the valve body.

Ideally, the valve mounts a blanking closure in its gas inlet. This is a safety precaution to prevent the leaking of buoyancy gas inserted into the float which buoyancy gas would generally be air.

Ideally,
the float is manufactured from polyethylene.

### Detailed Description of the Invention

The invention will now be more clearly understood from the following description of an embodiment thereof, given by way of example only described with reference to the accompanying drawings in which:
Fig. 1 is a front vew of a buoyancy float according to the present invention;
Fig. 2 is a plan view of the buoyancy float;
Fig. 3 is a side view of the buoyancy float part sectionalised along the lines III-III of Fig. 1;
Fig. 4 is a side view of a valve according to the invention,
Fig. 5 is a top view of the valve with a set screw removed,
Fig. 6 is an underview of the valve with portion of the valve removed,
Fig. 7 is an underview of the valve in the assembled position,
Figs. 8 to 10 (inclusive) are perspective views of the buoyancy float in different positions of use; and
Fig. 11 is a side view of a fishing net suspended from buoyancy floats.

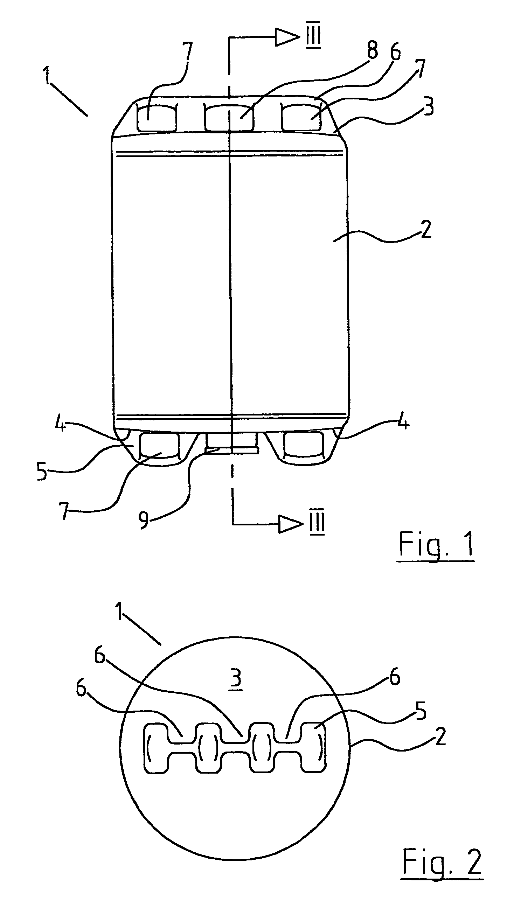

Referring to the drawings and initially to Figs. 1 to 3 thereof, there is provided a buoyancy float, indicated generally by the reference numeral 1, comprising an elongate cylindrical body member 2 having a pair of spaced-apart end plates 3 and 4. On the endplate 3 there is mounted a support formed from four upstanding radially arranged pillars 5 bridged by connector plates 6 having through-holes forming two anchorages 7 and a hole forming a handle 8. The end plate 4 carries another four pillars 5 with connector plates 6 between the outermost pillar supports 5, again having a pair of through-holes forming anchorage holes 7. Intermediate the two innermost pillar supports 5 there is mounted a threaded spigot 9, the threaded spigot 9 is used for mounting either a closure, not shown, or a valve mounting such as, for example, a one-way valve.

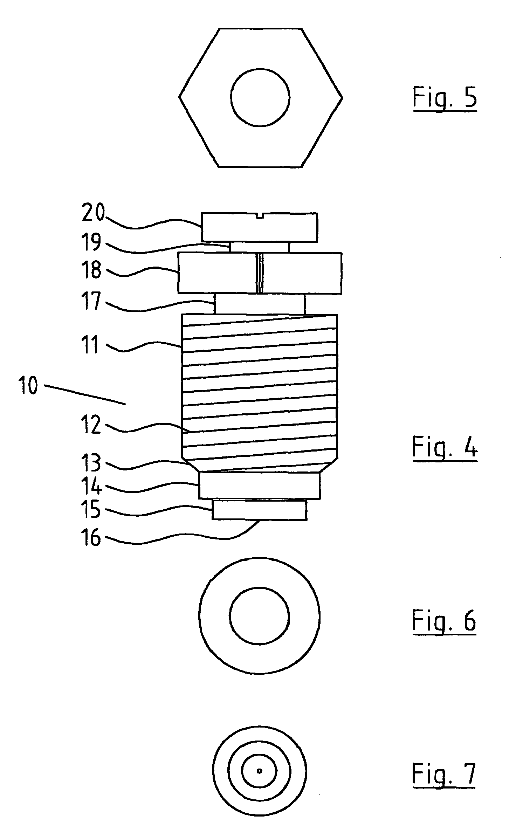

Referring now specifically to Figs. 4 to 7, there is illustrated a closure 10 formed by a non-return valve which comprises a valve body 11 having screw threads 12 tapering at its distal free end 13 and terminating in a cylindrical portion 14 mounting a non-return valve mechanism 15 such as sold under the Trade Mark VENTREX which forms a gas outlet 16. The proximal end of the valve body 11 carries an undercut O-ring receiving groove 17 and a hexagonal head 18 forming a gas inlet 19 within which is mounted a set screw forming a blanking closure 20, the set screw normally mounts a rubber o-ring seal, which seal is not shown on the drawing.

The buoyancy float 1 is moulded including the spigot 9 which incorporates a hole relatively small compared to the valve body 11. While the moulding is still warm and the plastics material malleable, the cylindrical portion 14 of the closure 10 is inserted into the spigot 9 and rotated until the threads firmly lock the closure 10 against the spigot 9. O-rings are preferably mounted in the groove 17 before insertion of the closure 10.

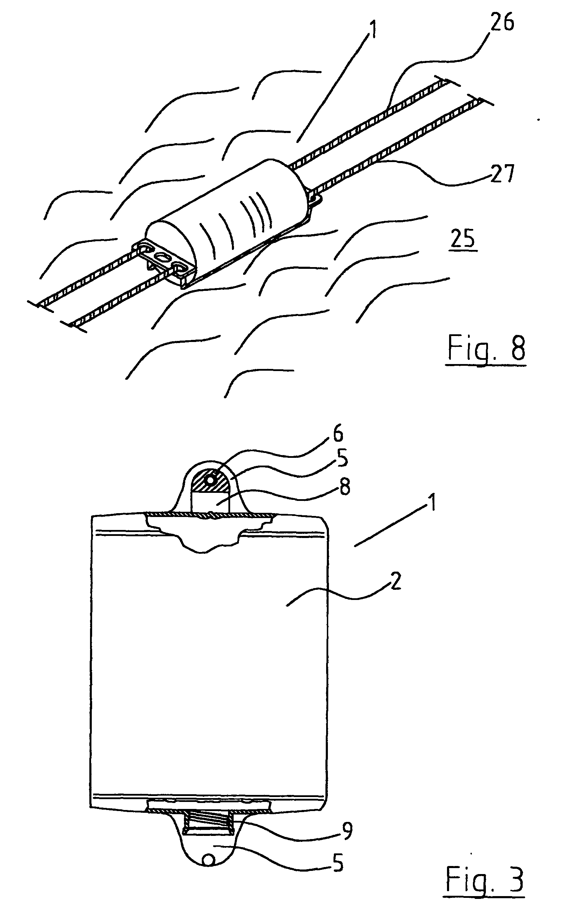

In use, and referring specifically to Fig. 8, there is illustrated the float 1 in the sea, the upper surface of which is identified by the reference numeral 25. The float 1 carries two ropes 26 and 27, which ropes are connected at their extremities to other floats 1, or to, for example, a permanent anchorage such as a quay wall, or indeed a vessel all of which is not illustrated. The two ropes 26 and 27 are spaced apart and thus can be used to, for example, hang other ropes for the growing of mussels, netting and the like.

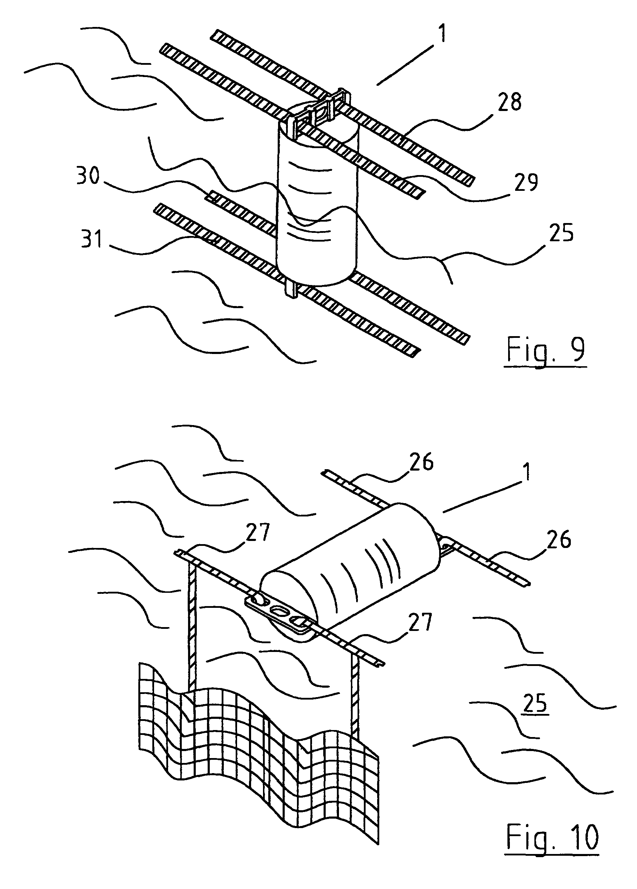

Fig. 9 shows an alternative construction in which there are upper ropes 28 and 29 again spaced apart and lower ropes 30 and 31, again spaced apart. It will be appreciated that the float 1 is now lying vertically in the water.

Fig. 10 illustrates the float 1 again lying horizontally in the water, but in this case it supports two spaced apart ropes 26 and 27 which will be spaced apart the distance between the ends of the float. Here again, each rope is connected to two anchorages but they are now on the one end plate. This, will give the maximum spacing between the ropes 26 and 27, which may be desired in certain circumstances.

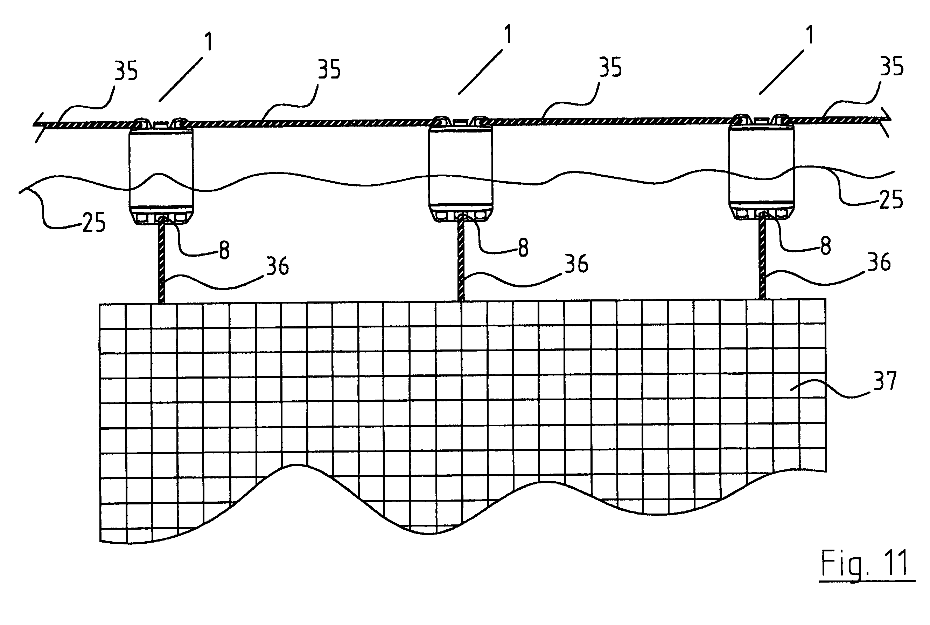

Referring to Fig. 11 there is illustrated an alternative arrangement which is particularly suitable for use in heavy seas. There is illustrated a plurality of floats 1 mounted between a rope 35 which is anchored at both ends, the anchorage of which is not shown. Suspended from the central handle 8 by ropes 36 of approximately 2 meters in length is a fishing net 37. In this embodiment the handle 8 is actually the anchorage for the ropes 36. Equally well, the anchorages 7 on the end plate 3 could be used.

Blow moulding is very suitable for manufacturing the floats according to the invention. Polypropylene is a particularly suitable plastics material.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail, and being limited only by the scope of the appended claims.

## Claims

1. A method of manufacturing a buoyancy float (1) of the type comprising an inflatable, elongate, hollow body (2) of a thermoplastics material, the float body (2) terminating adjacent each end in at least a pair of spaced-apart anchorages (7), wherein the method comprises the steps of:-
moulding the hollow body (2) from the hot plastics material,
forming a throughbore in one end of the float body (2),
**characterised in that** the method further comprises the step of
forming a screw thread in the throughbore by inserting a closure (10) having a closure body (11) into the throughbore while the thermoplastics material is warm and malleable, the closure body (11) having a screw thread (12) formed thereon.

2. A method as claimed in claim 1 where the method comprises the intermediate step of
forming a closure-receiving spigot (9) in one end of the float body (2), the closure-receiving spigot (9) being proud of the float body (2),
and thereafter forming the throughbore in the closure-receiving spigot (9).

3. A method as claimed in claim 1 or 2 in which the step of forming the throughbore in one end of the float body further comprises forming a throughbore having a diameter substantially smaller than the exterior dimensions of the screw-thread (12) formed on the closure body (11).

4. A method as claimed in any preceding claim in which the method comprises the additional step of rotating the closure (10) as it is inserted into the throughbore.

5. A method as claimed in any preceding claim in which the method comprises the additional step of allowing the plastics material to set around the screw-thread (12) formed on the closure body (11).

6. A method as claimed in claim 1 in which the method comprises the intermediate steps of
forming a substantially cylindrical body (2) having a pair of end plates (3, 4) and
forming an upstanding support on each end plate, each support having through-holes forming the anchorages (7).

7. A method as claimed in claim 2 in which the method comprises the intermediate steps of
forming a substantially cylindrical body (2) having a pair of end plates (3, 4) and
forming an upstanding support on each end plate, each support having through-holes forming the anchorages (7).

8. A method as claimed in claim 6 in which the method comprises the intermediate steps of
forming one support comprising four upstanding in-line pillars (15) bridged by connector plates (6) having three through holes, the outer holes forming the anchorages (7) and the inner hole, a carrying handle (8), and
forming the other support comprising four upstanding in-line pillars (5), each of the outer pillars bridged by a connector plate (6) within the adjacent pillar (5), the connector plates (6) having holes forming the anchorages (7) and a closure-receiving spigot (9) formed between the inner pillars (5).

9. A method as claimed in claim 7 in which the method comprises the intermediate steps of
forming one support comprising four upstanding in-line pillars (15) bridged by connector plates (6) having three through holes, the outer holes forming the anchorages (7) and the inner hole, a carrying handle (8), and
forming the other support comprising four upstanding in-line pillars (5), each of the outer pillars bridged by a connector plate (6) within the adjacent pillar (5), the connector plates (6) having holes forming the anchorages (7) and the closure-receiving spigot (9) formed between the inner pillars (5).

10. A method as claimed in any preceding claim in which the step of forming a screw thread in the throughbore by inserting the closure (10) further comprises inserting a closure (10) having a closure body (11) with a screw thread (12) formed thereon that tapers towards the distal free end (13) of the closure body over portion of its length.

11. A method as claimed in any preceding claim in which the step of forming a screw thread in the throughbore by inserting a closure (10) further comprises inserting a one-way valve for inflation of the float, the valve comprising a valve body (11) having a gas inlet (19) and a gas outlet (16) and a non-return valve mechanism in the valve body (11).

12. A method as claimed in claim 11 in which the valve mounts a blanking closure (20) in its gas inlet (19).

13. A method as claimed in any preceding claim in which the buoyancy float (1) is manufactured from polyethylene.

## Patentansprüche

1. Verfahren zum Herstellen eines Auftriebsschwimmers (1) des Typs, der einen aufblasbaren, länglichen, hohlen Körper (2) aus einem Thermoplastmaterial umfasst, wobei der Schwimmerkörper (2) angrenzend an jedes Ende jeweils in mindestens einem Paar beabstandeter Verankerungen (7) endet, wobei das Verfahren folgende Schritte umfasst:
Formen des hohlen Körpers (2) aus dem heißen Kunststoffmaterial,
Bilden einer Durchgangsbohrung in einem Ende des Schwimmerkörpers (2),
**dadurch gekennzeichnet, dass** das Verfahren weiter folgenden Schritt umfasst:
Bilden eines Schraubengewindes in der Durchgangsbohrung durch Einführen eines Verschlusses (10) mit einem Verschlusskörper (11) in die Durchgangsbohrung während das Thermoplastmaterial warm und umformbar ist, wobei am Verschlusskörper (11) ein Schraubengewinde (12) geformt ist.

2. Verfahren nach Anspruch 1, wobei das Verfahren folgenden Zwischenschritt umfasst:
Bilden eines den Verschluss aufnehmenden Zapfens (9) in einem Ende des Schwimmerkörpers (2), wobei der den Verschluss aufnehmende Zapfen (9) über dem Schwimmerkörper (2) vorsteht,
und danach Bilden der Durchgangsbohrung in dem den Verschluss aufnehmenden Zapfen (9).

3. Verfahren nach Anspruch 1 oder 2, wobei der Schritt des Bildens der Durchgangsbohrung in einem Ende des Schwimmerkörpers weiter das Bilden einer Durchgangsbohrung umfasst, die einen Durchmesser hat, der wesentlich kleiner ist als die Außenabmessungen des am Verschlusskörper (11) gebildeten Schraubengewindes (12).

4. Verfahren nach einem der vorangehenden Ansprüche, wobei das Verfahren den zusätzlichen Schritt des Drehens des Verschlusses (10) umfasst, wenn er in die Durchgangsbohrung eingeführt wird.

5. Verfahren nach einem der vorangehenden Ansprüche, wobei das Verfahren den zusätzlichen Schritt des Erhärtenlassens des Kunststoffmaterials um das am Verschlusskörper (11) gebildete Schraubengewinde (12) umfasst.

6. Verfahren nach Anspruch 1, wobei das Verfahren folgende Zwischenschritte umfasst:
Bilden eines im Wesentlichen zylindrischen Körpers (2) mit einem Paar Stirnplatten (3, 4) und
Bilden eines aufrechten Trägers an jeder Stirnplatte, wobei jeder Träger durchgehende Öffnungen hat, die die Verankerungen (7) bilden.

7. Verfahren nach Anspruch 2, wobei das Verfahren folgende Zwischenschritte umfasst:
Bilden eines im Wesentlichen zylindrischen Körpers (2) mit einem Paar Stirnplatten (3, 4) und
Bilden eines aufrechten Trägers an jeder Stirnplatte, wobei jeder Träger durchgehende Öffnungen hat, die die Verankerungen (7) bilden.

8. Verfahren nach Anspruch 6, wobei das Verfahren folgende Zwischenschritte umfasst:
Bilden eines Trägers umfassend vier aufrechte in einer Reihe angeordnete Pfosten (15), die durch Verbindungsplatten (6) mit drei durchgehenden Öffnungen überbrückt werden, wobei die äußeren Öffnungen die Verankerungen (7) bilden und die innere Öffnung einen Traggriff (8) bildet, und
Bilden des anderen Trägers umfassend vier aufrechte, in einer Reihe angeordnete Pfosten (5), wobei die äußeren Pfosten jeweils durch eine Verbindungsplatte (6) im benachbarten Pfosten (5) überbrückt sind, wobei die Verbindungsplatten (6) Öffnungen, die die Verankerungen (7) bilden, haben und ein den Verschluss aufnehmender Zapfen (9) zwischen den inneren Pfosten (5) gebildet ist.

9. Verfahren nach Anspruch 7, wobei das Verfahren folgende Zwischenschritte umfasst:
Bilden eines Trägers umfassend vier aufrechte in einer Reihe angeordnete Pfosten (15), die durch Verbindungsplatten (6) mit drei durchgehenden Öffnungen überbrückt werden, wobei die äußeren Öffnungen die Verankerungen (7) bilden und die innere Öffnung einen Traggriff (8) bildet, und
Bilden des anderen Trägers umfassend vier aufrechte, in einer Reihe angeordnete Pfosten (5), wobei die äußeren Pfosten jeweils durch eine Verbindungsplatte (6) im benachbarten Pfosten (5) überbrückt sind, wobei die Verbindungsplatten (6) Öffnungen, die die Verankerungen (7) bilden haben und der den Verschluss aufnehmende Zapfen (9) zwischen den inneren Pfosten (5) gebildet ist.

10. Verfahren nach einem der vorangehenden Ansprüche, wobei der Schritt des Bildens eines Schraubengewindes in der Durchgangsbohrung durch Einführen des Verschlusses (10) weiter das Einführen eines Verschlusses (10) umfasst, der einen Verschlusskörper (11) mit einem daran gebildeten Schraubengewinde (12) hat, der über einen Abschnitt seiner Länge zum distalen freien Ende (13) des Verschlusskörpers verjüngt ist.

11. Verfahren nach einem der vorangehenden Ansprüche, wobei der Schritt des Bildens eines Schraubengewindes in der Durchgangsbohrung durch Einführen eines Verschlusses (10) weiter das Einführen eines Einwegeventils zum Aufblasen des Schwimmers umfasst, wobei das Ventil einen Ventilkörper (11) mit einem Gaseinlass (19) und einem Gasauslass (16) und einen Rückschlagventilmechanismus in dem Ventilkörper (11) umfasst.

12. Verfahren nach Anspruch 11, wobei das Ventil einen Verschlussstopfen (20) in seinem Gaseinlass (19) hält.

13. Verfahren nach einem der vorangehenden Ansprüche, wobei der Auftriebsschwimmer (1) aus Polyethylen hergestellt wird.

## Revendications

1. Procédé de fabrication d'un boudin de flottaison (1) de type comportant un organe creux allongé, gonflable (2), en matière thermoplastique, l'organe flotteur (2) se terminant en position adjacente à chaque extrémité en au moins une paire d'ancrages espacés (7), le procédé comprenant les étapes suivantes :
moulage de l'organe creux (2) avec de la matière plastique chaude,
formation d'un trou traversant dans une extrémité de l'organe flotteur (2),
**caractérisé en ce que** le procédé comprend de plus l'étape suivante :
formation d'un filetage dans le trou traversant en insérant une fermeture (10) munie d'un organe de fermeture (11) dans le trou traversant pendant que la matière thermoplastique est chaude et flexible, l'organe de fermeture (11) étant doté d'un filetage (12).

2. Procédé conforme à la revendication 1, où le procédé comprend l'étape intermédiaire suivante :
formation d'un embout (9) destiné à recevoir la fermeture dans une extrémité de l'organe flotteur (2), l'embout (9) destiné à recevoir la fermeture faisant saillie sur l'organe de flottaison (2).
et ensuite formation du trou traversant dans l'embout (9) destiné à recevoir la fermeture.

3. Procédé conforme à la revendication 1 ou 2, où l'étape de formation du trou traversant dans une extrémité de l'organe de flottaison comporte de plus la formation d'un trou traversant doté d'un diamètre sensiblement inférieur aux dimensions extérieures du filetage (12) dont est doté l'organe de fermeture (11).

4. Procédé conforme à une quelconque des revendications précédentes, où le procédé comprend l'étape supplémentaire consistant à faire tourner la fermeture (10) en même temps qu'on l'insère dans le trou traversant.

5. Procédé conforme à une quelconque des revendications précédentes, où le procédé comporte l'étape supplémentaire consistant à permettre à la matière plastique de durcir autour du filetage (12) dont est doté l'organe de fermeture (11).

6. Procédé conforme à la revendication 1, où le procédé comporte les étapes supplémentaires suivantes :
formation d'un organe sensiblement cylindrique (2) muni d'une paire de plaques d'extrémité (3, 4), et
formation d'un support vertical sur chaque plaque d'extrémité, chaque support étant doté de trous traversants formant les ancrages (7).

7. Procédé conforme à la revendication 2, où le procédé comporte les étapes supplémentaires suivantes :
formation d'un organe sensiblement cylindrique (2) muni d'une paire de plaques d'extrémité (3, 4), et
formation d'un support vertical sur chaque plaque d'extrémité, chaque support étant doté de trous traversants formant les ancrages (7).

8. Procédé conforme à la revendication 6, où le procédé comporte les étapes supplémentaires suivantes :
formation d'un support comportant quatre poteaux verticaux alignés (15) reliés par des plaques de raccordement (6) munies de trois trous traversants, les trous extérieurs formant les ancrages (7) et le trou intérieur formant une poignée de transport (8), et
formation de l'autre support comportant quatre poteaux verticaux alignés (5), chacun des poteaux extérieurs étant relié par une plaque de raccordement (6) à l'intérieur du poteau adjacent (5), les plaques de raccordement (6) étant dotées de trous formant les ancrages (7) et un embout (9) destiné à recevoir la fermeture étant formé entre les poteaux intérieurs (5).

9. Procédé conforme à la revendication 7, où le procédé comporte les étapes supplémentaires suivantes :
formation d'un support comportant quatre poteaux verticaux alignés (15) reliés par des plaques de raccordement (6) munies de trois trous traversants, les trous extérieurs formant les ancrages (7) et le trou intérieur formant une poignée de transport (8), et
formation de l'autre support comportant quatre poteaux verticaux alignés (5), chacun des poteaux extérieurs étant relié par une plaque de raccordement (6) à l'intérieur du poteau adjacent (5), les plaques de raccordement (6) étant dotées de trous formant les ancrages (7) et un embout (9) destiné à recevoir la fermeture étant formé entre les poteaux intérieurs (5).

10. Procédé conforme à une quelconque des revendications précédentes, où l'étape consistant à former un filetage dans le trou traversant en insérant la fermeture (10) comporte de plus l'insertion d'une fermeture (10) dotée d'un organe de fermeture (11) doté d'un filetage (12) qui s'amincit vers l'extrémité libre distale (13) de l'organe de fermeture sur une partie de sa longueur.

11. Procédé conforme à une quelconque des revendications précédentes, où l'étape consistant à former un filetage dans le trou traversant en insérant une fermeture (10) comporte de plus l'insertion d'un clapet de non-retour pour le gonflage du flotteur, le clapet comprenant un corps de clapet (11) muni d'une admission de gaz (19) et d'une sortie de gaz (16) et d'un mécanisme de clapet de non-retour dans le corps de clapet (11).

12. Procédé conforme à la revendication 11, où le clapet comprend un bouchon d'obturation (20) dans son admission de gaz (19).

13. Procédé conforme à une quelconque des revendications précédentes, où le boudin de flottaison (1) est fabriqué en polyéthylène.
